# EUROPÄISCHE PATENTSCHRIFT

(11) **EP 4 332 902 B1**
(45) Veröffentlichungstag und Bekanntmachung des Hinweises auf die Patenterteilung: **06.11.2024**
(21) Anmeldenummer: 22193749.3
(22) Anmeldetag: 02.09.2022
(51) Int. Cl.: G06T 7/73

(54) **LOKALISIERUNG EINES OPTISCHEN MARKERS**
OPTICAL MARKER LOCALIZATION
LOCALISATION D'UN MARQUEUR OPTIQUE

(43) Veröffentlichungstag der Anmeldung: 06.03.2024
(73) Patentinhaber: SICK AG, 79183 Waldkirch (DE)
(72) Erfinder: Hofmann, Dr. Christoph, Waldkirch (DE); Arockiaraj, Alfred, Waldkirch (DE)

(56) Entgegenhaltungen:
- EP-A1- 3 734 423
- US-A1- 2018 345 498
- US-A1- 2021 383 551

## Beschreibung

Die Erfindung betrifft eine Kameravorrichtung und ein Verfahren zur Lokalisierung eines optischen Markers nach dem Oberbegriff von Anspruch 1 beziehungsweise 12.

In einer Reihe von wichtigen Anwendungen des maschinellen Sehens (Computer Vision) ist die Bestimmung einer Pose erforderlich, etwa diejenige eines Roboters oder eines Fahrzeugs. Beispiele sind Navigation oder erweiterte Realität (Augmented Reality). Zur Schätzung einer Pose aus einem Kamerabild ist es erforderlich, Korrespondenzen zwischen der aufgenommenen 2D-Projektion und den realen 3D-Positionen zu finden. Dies ist ausgesprochen fordernd und fehlerträchtig.

Künstliche optische Marker können diesen Prozess vereinfachen und die Robustheit verbessern. Das gilt besonders für sogenannte Passermarken (Fiducial, Marker), die ausreichend Merkmale bieten, um die Pose zu rekonstruieren. Im einfachsten Fall sind die Merkmale die vier Ecken des Markers, wobei zusätzliche Robustheit einschließlich der Möglichkeit von Fehlererkennung und Fehlerkorrektur durch weitere innere Merkmale des Markers geschaffen werden kann.

Ein bekanntes Vision-System auf Basis von Fiducial Markern ist AprilTag, s. https://april.eecs.umich.edu/software/apriltag.html einschließlich einer dort angeführten Literatuniste. Es umfasst eine in C implementierte Bibliothek mit Funktionen unter anderem zur Bestimmung von 3D-Position, Orientierung und Identität der Marker. Eine Alternative ist ArUco, mit einem Tutorial unter https://docs.opencv.org/4.x/d5/dae/tutorial_aruco_detection.html. VuMarks bietet eine weitere Klasse spezieller künstlicher Marker, s. https://library.vuforia.com/objects/vumarks. Die Arbeit von Shabalina et al., "Comparing fiducial markers performance for a task of a humanoid robot seff-calibration of manipulators: A pilot experimental study", International Conference on Interactive Collaborative Robotics, Springer, Cham, 2018 beschreibt eine praktische Studie mit verschiedenen Fiducial Markern.

Auch wenn demnach optische Marker die Verlässlichkeit gegenüber markerlosen Systemen deutlich verbessern, werden damit noch längst nicht die besonderen Anforderungen der Sicherheitstechnik erfüllt, wenn also die Kameravorrichtung eine Maschine absichern soll, um Unfälle mit Personen zu vermeiden. Eine solche sichere Kameravorrichtung muss gemäß einschlägigen Sicherheitsnormen ausgebildet sein, beispielsweise der Norm IEC/EN 13849 für Maschinensicherheit, der Norm IEC/EN 61508 für funktionale Sicherheit beziehungsweise der Gerätenorm IEC/EN 61496 für berührungslos wirkende Schutzeinrichtungen (BWS). Je nach verbleibendem Restrisiko werden gemäß solchen Normen bestimmte Sicherheitsstufen erreicht, etwa Safety Integrity Levels (SIL) nach IEC 61508 oder Performance Level (PL) nach IEC 13849. Die genannten herkömmlichen Vision-Systeme erreichen keine Sicherheitsstufe.

Neben üblichen 2D-Kameras sind auch 3D-Kameras bekannt, die tiefenaufgelöste oder dreidimensionale, auch als Tiefenkarte bezeichnete Bilddaten aufnehmen. Es existieren zahlreiche 3D-Verfahren, beispielsweise die an das menschliche Sehen angelehnte Stereoskopie, Triangulationsverfahren zu einem bekannten projizierten Beleuchtungsmuster, Bildsensoren mit Lichtlaufzeitmessung in ihren Pixeln (ToF, Time of Flight) oder auch Laserscanner mit Scanmechanismen in zwei Achsen. Die kurz vorgestellten Vision-Systeme mit Fiducial Markern nutzen keine 3D-Bildaufnahme. Der Einsatz einer 3D-Kamera führt an sich zu keiner Sicherheitsstufe.

Die EP 1 933 167 B1 offenbart einen optoelektronischen Sensor zur Erfassung und Abstandsbestimmung eines Objekts sowohl mittels Stereoskopie als auch einem Triangulationsverfahren anhand eines projizierten Beleuchtungsmusters mit anschließendem Vergleich der jeweiligen dreidimensionalen Bilder. Die US 2011/025827 A1 erzeugt eine Tiefenkarte mittels Mustervergleich eines Projektionsmusters und Stereoskopie. Die Arbeit von Um et al., "Three-dimensional scene reconstruction using multiview images and depth camera", Stereoscopic Displays and Virtual Reality Systems XII, Vol. 5664, SPIE, 2005 fusioniert ein 3D-Bild aus zwei Stereokorrelationen eines zentralen Bildes mit einem linken Bild beziehungsweise mit einem rechten Bild. In der DE 10 2005 028 490 B4 wird ein Kamerasystem vorgestellt, das eine Stereokamera und eine zusätzliche Farb- oder Infrarotkamera aufweist.

Die EP 3 734 423 A1 befasst sich mit der kamerabasierten Lokalisierung von optisch erfassbaren Markern. Dabei werden ein erster und zweiter Lokalisierungsdetektor eingesetzt, und mindestens eines der Resultate der beiden Erfassungen wird für die Lokalisierung ausgewählt. Anwendungen der Sicherheitstechnik sind nicht diskutiert, und es wird dementsprechend kein Nachweis geführt, dass eine Sicherheitsstufe gemäß einer Sicherheitsnorm erreicht würde. Eine Struktur der Marker entsprechend einem Fiducial Marker wird ebenfalls nicht beschrieben.

Die US 2021/0383551 A1 befasst sich mit Fiducial Markern und deren automatischer Erfassung in einem Multi-Kamera-System. Mit den mehreren Kameras wird die Wahrscheinlichkeit erhöht, einen Marker mit einer Kamera zu finden. Die Verlässlichkeit der Lokalisierung und Posenbestimmung mittels eines einmal erfassten Markers ist dadurch nicht erhöht und erreicht jedenfalls keine Sicherheitsstufe gemäß einer Sicherheitsnorm.

Die US20180345498A1 beschreibt eine Möglichkeit zum Messen der Reaktionszeit von einer Sicherheitsabschaltung bis zum Erreichen eines sicheren Zustands.

Es ist daher Aufgabe der Erfindung, die Lokalisierung eines optischen Markers zu verbessern.

Diese Aufgabe wird durch eine Kameravorrichtung und ein Verfahren zur Lokalisierung eines optischen Markers nach Anspruch 1 beziehungsweise 12 gelöst Die Kameravorrichtung weist mindestens einen Bildsensor auf, mit dem vorzugsweise in einer Vielzahl von Pixeln aufgelöste Bilder aufgenommen werden können. Eine Steuer- und Auswertungseinheit, beispielsweise mindestens ein digitaler Rechenbaustein, ist in der Lage, Bilddaten auszulesen und zu verarbeiten. Mit dem Bildsensor und der Steuer- und Auswertungseinheit wird ein erster Kamerakanal zur Aufnahme erster Bilddaten gebildet. Die ersten Bilddaten können eine Aufnahme mit dem Bildsensor oder Verarbeitungsergebnisse davon sein, beispielsweise eine durch einen Stereoalgorithmus gewonnene Tiefenkarte. Die Steuer- und Auswertungseinheit findet den optischen Marker in den ersten Bilddaten und bestimmt eine erste Pose des optischen Markers, d.h. dessen Position und Orientierung relativ zu der Kameravorrichtung. Je nach mobiler oder stationärer Anwendung kann dabei das Ziel sein, die eigene Pose der Kameravorrichtung im Raum herauszufinden, wie beispielsweise bei der Navigation, oder die Pose eines erfassten Objekts wie eines Roboters zu dessen Umgebung Grundlage ist jeweils die relative Pose des Markers im Bezugssystem der Karneravorrichtung.

Die Erfindung geht von dem Grundgedanken aus, mit dem Bildsensor und der Steuer- und Auswertungseinheit noch mindestens einen zweiten Kamerakanal zum Erzeugen zweiter Bilddaten zu bilden. Je nach Ausführungsform nutzen die beiden Kamerakanäle denselben Bildsensor auf unterschiedliche Weise oder verschiedene Bildsensoren beziehungsweise Kombinationen davon. Jedenfalls ist das Bildgebungsverfahren im Ergebnis im zweiten Kamerakanal ein anderes als im ersten Kamerakanal, die beiden Kamerakanäle sind diversitär beziehungsweise diversitär-redundant. Ebenso erfolgt die Auswertung der zweiten Bilddaten je nach Ausführungsform in derselben Steuer- und Auswertungseinheit, in unterschiedlichen Bereichen oder in verschiedenen digitalen Rechenbausteinen. Die Auswertungen sind ebenfalls diversitär beziehungsweise diversitär-redundant, bereits als Ergebnis der unterschiedlichen Bildgebungsverfahren und vorzugsweise darüber hinaus auch ganz gezielt. Diese Diversität bezieht sich auf das Auswertungsverfahren und/oder die zugrundeliegende Hardware. Die Steuer- und Auswertungseinheit findet den optischen Marker ein zweites Mal nun in den zweiten Bilddaten und bestimmt eine zweite Pose des optischen Markers. Dabei gilt sinngemäß das, was im Vorabsatz zur ersten Pose erläutert wurde. Die erste Pose und die zweite Pose würden in einer idealen Welt perfekt übereinstimmen. Die Steuer- und Auswertungseinheit vergleicht die erste Pose und die zweite Pose miteinander. Dabei ist die Erwartung, dass die Übereinstimmung im Rahmen von vorgegebenen Toleranzen auch praktisch erreicht wird. Andernfalls muss in mindestens einem der Kamerakanäle ein Fehler vermutet werden, und die Verlässlichkeit der Lokalisierung beziehungsweise Posenbestimmung ist zumindest für diesen Zeitpunkt nicht gegeben. Das ist je nach Ausführungsform ein Hinweis oder bereits ein ausreichendes Kriterium dafür, dass die funktionale Sicherheit nicht gewährleistet ist, und daraus kann anwendungsspezifisch eine Reaktion abgeleitet werden.

Die Erfindung hat den Vorteil, dass eine verlässliche oder sogar sichere Lokalisierung optischer Marker und eine darauf basierende Posenbestimmung ermöglicht wird. Dabei bedeutet sicher oder Sicherheit in der gesamten Beschreibung, dass Anforderungen einer Sicherheitsnorm für Maschinensicherheit oder funktionale Sicherheit erfüllt sind, von denen einleitend beispielhaft einige genannt sind. Die dafür herangezogenen Kamerakanäle können auf praktisch jeder häufig genutzten Kameratechnologie aufsetzen. Durch unterschiedliche Kamerakanäle und Kameraarchitekturen sowie unterschiedliche Auswertungen können gezielt gewünschte Sicherheitsstufen wie SIL (Safety Integrity Level) oder PL (Performance Level) erreicht werden.

Der optische Marker weist mindestens drei Referenzmerkmale bekannter Positionen innerhalb des optischen Markers auf. Es handelt sich insbesondere um einen Fiducial Marker (Passermarker, Rahmenmarker). Die drei Referenzmerkmale ermöglichen die Posenbestimmung nach Art des Dreibeins, indem sie eine 2D-Geometrie im Raum festlegen, wobei vorzugsweise für eine redundante und insgesamt robustere Posenbestimmung vier oder noch mehr Referenzmerkmale vorgesehen sind. Fiducial Marker sind an sich bekannt, und es wird! ergänzend auf die Einhaltung verwiesen.

Die Steuer- und Auswertungseinheit ist dafür ausgebildet, ein Absicherungssignal an eine überwachte Maschine auszugeben, wenn die erste Pose und die zweite Pose über eine Toleranz hinaus voneinander abweichen. Die Toleranz kann räumlich, d.h. in Position und/oder Orientierung, und/oder zeitlich vorgegeben sein. Die Kameravorrichtung ist hier vorzugsweise in der typischen Sicherheitsanwendung zur Unfallvermeidung an einer überwachten Maschine eingesetzt, sei es mobil wie an einem Fahrzeug oder stationär wie zur Überwachung eines Roboters. Diese Maschine wird abgesichert, wenn die beiden Posen in nicht tolerierbarer Weise voneinander abweichen und somit die Verlässlichkeit oder Sicherheit der Posenbestimmung nicht gewährleistet ist. Die Absicherung kann anwendungsabhängig beispielsweise ein Verlangsamen, Ausweichen oder ein Notstopp sein.

Die Steuer- und Auswertungseinheit ist bevorzugt dafür ausgebildet, die erste Pose und/oder zweite Pose über die Zeit zu verfolgen und insbesondere eine Vorhersage einer Pose in dem Vergleich der ersten Pose mit der zweiten Pose zu berücksichtigen. Die Historie der Posen ermöglicht eine recht präzise Vorhersage der gegenwärtigen Pose bereits ohne erneute Messung. Entsprechende Verfahren der Objektverfolgung (Tracking) beispielsweise auf Basis von Kalmanfiltern sind an sich bekannt. Die vorhergesagte Pose kann ein weiterer Indikator für einen Fehler in einem der beiden Kamerakanäle sein, wenn dort eine mit der Vorhersage unverträgliche Pose bestimmt wird.

Mindestens ein Kamerakanal nimmt vorzugsweise farbige oder monochrome zweidimensionale Bilddaten auf und wertet die zweidimensionalen Bilddaten aus. Mindestens ein Kamerakanal basiert somit in ganz üblicher Weise auf zweidimensionalen Kamerabildern. Zur Lokalisierung von optischen Markern und Posenbestimmung kann dann auf herkömmliche Verfahren wie AprilTag und die sonstigen einleitend beschriebenen Vision-Systeme zurückgegriffen werden. Der betroffene Kamerakanal ist selbst nicht sicher oder muss es jedenfalls nicht sein, die höhere Verlässlichkeit oder Sicherheit wird durch die Kombination mit dem anderen Kamerakanal erreicht.

Mindestens ein Kamerakanal nimmt bevorzugt dreidimensionale Bilddaten nach dem Stereoskopieprinzip auf und wertet die dreidimensionalen Bilddaten aus. Dafür weist die Kameravorrichtung mindestens zwei Bildsensoren oder Einzelkameras zur Erzeugung von zwei gegeneinander perspektivisch versetzt aufgenommenen zweidimensionalen Bildern auf. Aus den jeweiligen Bildpaaren wird durch Anwendung eines Stereoalgorithmus' zur Schätzung von Disparitäten korrespondierender Bildmerkmale eine Tiefenkarte erzeugt In mindestens einem der beiden zweidimensionalen Bilder kann mit den herkömmlichen Verfahren der optische Marker lokalisiert werden. Damit ist bekannt, welche Pixel der Tiefenkarte zum optischen Marker gehören, die zugehörige 3D-Position kann dann aus der Tiefenkarte entnommen werden. Der andere Kamerakanal nutzt mindestens einen der beiden Bildsensoren oder einen zusätzliche eigenen Bildsensor.

Mindestens ein Kamerakanal nimmt bevorzugt dreidimensionale Bilddaten nach dem Lichtlaufzeitverfahren auf und wertet die dreidimensionalen Bilddaten aus. Das ist ein alternatives dreidimensionales Bildgebungsverfahren. Es gibt insbesondere spezielle TOF-Chips (Time of Flight), die entsprechende Tiefen karten erzeugen. Aus den zugehörigen Intensitäten kann bestimmt werden, welche Pixel zu dem optischen Marker gehören, und erneut kann die zugehörige 3-D Position aus der Tiefenkarte entnommen werden.

Die Kameravorrichtung ist bevorzugt als Monochrom-Stereokamera oder als RGB-Stereokamera mit einem dritten Bildsensor ausgebildet, so dass sie zwei Stereo-Bildsensoren für die stereoskopische Erfassung zweier versetzter Bilder und einen zusätzlichen Monochrom-Bildsensor oder RGB-Bildsensor aufweist, wobei der Monochrom-Bildsensor oder der RGB-Bildsensor in dem ersten Kamerakanal eingesetzt ist und die beiden Stereo-Bildsensoren in dem zweiten Kamerakanal eingesetzt sind. In dieser beispielhaften konkreten Konfiguration der Kameravorrichtung gibt es insgesamt drei Bildsensoren. Dadurch können ein RGB- beziehungsweise monochromer erster Kamerakanal und ein stereoskopischer zweiter Kamerakanal miteinander kombiniert werden, wobei natürlich die feste sprachliche Zuordnung zum ersten oder zweiten Kamerakanal hier wie überall eine austauschbare Konvention ist.

Die Kameravorrichtung ist bevorzugt als Stereokamera mit zwei Stereo-Bildsensoren für die stereoskopische Erfassung zweier versetzter Bilder ausgebildet, wobei einer der Stereo-Bildsensoren in dem ersten Kamerakanal eingesetzt ist und die beiden Stereo-Bildsensoren in dem zweiten Kamerakanal eingesetzt sind. In dieser alternativen Ausführungsform gibt es nur zwei Bildsensoren. Anstelle eines dedizierten dritten Bildsensors für die Aufnahme von RGB- oder monochromen Bilddaten wird mindestens einer der beiden Stereo-Bildsensoren dafür in Doppelfunktion ein weiteres Mal genutzt. Das hat den Vorteil eines einfacheren Aufbaus, ist aber weniger diversitär und damit robuster als im Falle eines zusätzlichen dritten Bildsensors.

Die Kameravorrichtung ist bevorzugt als Lichtlaufzeitkamera mit einem TOF-Bildsensor ausgebildet, wobei aus Intensitäten des TOF-Bildsensors die ersten Bilddaten und aus Lichtlaufzeiten des TOF-Bildsensor die zweiten Bilddaten erzeugt werden. In dieser Ausführungsform gibt es nur einen einzigen Bildsensor in Form des TOF-Bildsensors. Damit werden sowohl ein Monochrombild aus den Intensitäten für den einen Kamerakanal als auch eine Tiefenkarte aus den Lichtlaufzeiten für den anderen Kamerakanal erzeugt.

Die Kameravorrichtung ist bevorzugt als Lichtlaufzeitkamera mit einem TOF-Bildsensor und einem zusätzlichen Monochrom-Bildsensor oder RGB-Bildsensor ausgebildet, wobei der Monochrom-Bildsensor oder RGB-Bildsensor in dem ersten Kamerakanal und der TOF-Bildsensor in dem zweiten Kamerakanal eingesetzt ist. In dieser alternativen Ausführungsform sind nun zwei Bildsensoren vorgesehen, wobei der zusätzliche Bildsensor das RGB- oder Monochrombild liefert. Damit ergibt sich zwar ein etwas komplexerer Aufbau der Kameravorrichtung, dafür sind aber Diversität und somit Robustheit erhöht.

Die Kameravorrichtung weist bevorzugt mindestens einen Bildsensor je Kamerakanal auf, wobei die Bildsensoren unterschiedlicher Kamerakanäle zueinander diversitär ausgebildet sind, sich insbesondere in ihrer Pixelanzahl, ihrer Pixelgröße, ihrem Pixelmuster, ihrer Pixelauslegung oder ihrem Fixed-Pattern-Noise voneinander unterscheiden. Obwohl es Ausführungsformen gibt, in denen sich die Kamerakanäle einen Bildsensor teilen, hat die Verwendung mindestens eines Bildsensors je Kamerakanal den Vorteil, dass sich eine höhere Diversität und damit Sicherheitsstufe erreichen lässt. Dafür stehen unterschiedlichste Eigenschaften der Bildsensoren beziehungsweise von deren Pixel zur Verfügung, die zwischen den Bildsensoren variiert sein können.

Die Steuer- und Auswertungseinheit ist bevorzugt für eine gegenseitige Kalibration der Kamerakanäle ausgebildet, in der die erste Pose und die zweite Pose zumindest zeitweise miteinander in Übereinstimmung gebracht wird. Damit wird eine systematische Abweichung der beiden Posen korrigiert, die nicht auf Fehler in einem Kamerakanal zurückzuführen ist, sondern auf unterschiedlichen Anfangsbedingungen der Kamerakanäle beruht. Die Kalibration kann wiederholt werden, beispielsweise zyklisch, zu zufälligen Zeitpunkten oder nach einem zu starken Auseinanderdriften. Vorteilhafterweise wird das Auseinanderdriften überwacht. Ein gleichmäßiges Auseinanderdriften kann zumindest in gewissen Grenzen toleriert werden, wobei der überwachte Drift beim Vergleich der beiden Posen berücksichtigt werden kann, Sprünge hingegen deuten auf einen Fehler in einem der Kamerakanäle hin.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung einer Kameravorrichtung mit zwei Kamerakanälen;
- Fig. 2: eine schematische Darstellung der Bestimmung einer Roboterpose anhand eines optischen Markers durch eine Kameravorrichtung;
- Fig. 3: eine schematische Darstellung der Bestimmung einer Fahrzeugpose anhand eines optischen Markers durch eine mitbewegte Kameravorrichtung;
- Fig. 4: eine schematische Darstellung einer Kameravorrichtung mit zwei Stereo-Bildsensoren und einem monochromen oder RGB-Bildsensor;
- Fig. 5: eine Illustration des Versatzes zwischen den in einem RGB-Kamerakanal und einem Stereo-Kamerakanal bestimmten Posen;
- Fig. 6: eine Illustration des durch Kalibration kompensierten Versatzes gemäß Figur 5;
- Fig. 7: eine Illustration des Auseinanderdriftens der in einem RGB-Kamerakanal und einem Stereo-Kamerakanal bestimmten Posen trotz anfänglicher Kalibration;
- Fig. 8: eine Illustration der erneuten Kompensation des Auseinanderdriftens gemäß Figur 7 durch wiederholte Kalibration beziehungsweise Rücksetzen der Berechnung;
- Fig. 9: eine schematische Darstellung einer Kameravorrichtung mit zwei Stereo-Bildsensoren ohne zusätzlichen monochromen oder RGB-Bildsensor;
- Fig. 10: eine schematische Darstellung einer Kameravorrichtung mit einem TOF-Bildsensor; und
- Fig. 11: eine schematische Darstellung einer Kameravorrichtung mit einem TOF-Bildsensor und einem zusätzlichen monochromen oder RGB-Bildsensor.

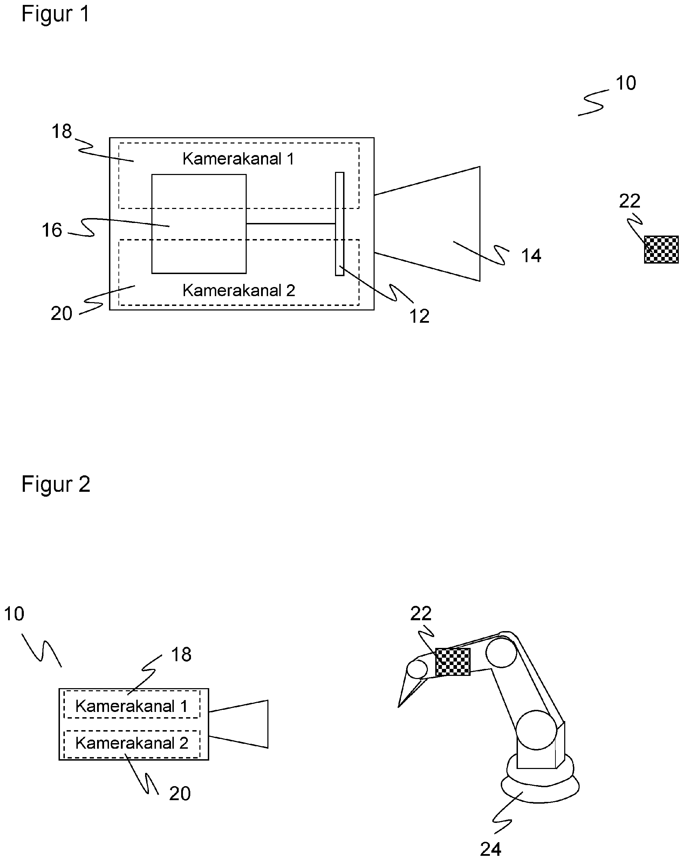

Figur 1 zeigt eine Blockdarstellung einer Kameravorrichtung 10. Darin ist mindestens ein Bildsensor 12 vorgesehen, der vorzugsweise als matrixförmiger Aufnahmechip ausgebildet ist und ein rechteckiges Pixelbild aufnimmt, beispielsweise ein CCD- oder ein CMOS-Sensor. Dem Bildsensor 12 ist ein nur ganz schematisch angedeutetes Objektiv 14 mit einer abbildenden Optik zugeordnet, welche in der Praxis als jedes bekannte Abbildungsobjektiv realisiert sein kann. Optional ist eine nicht gezeigte Beleuchtung vorgesehen, um den Erfassungsbereich zu erleuchten oder um ein strukturiertes Muster in den Erfassungsbereich zu projizieren.

Mit dem Bildsensor 12 ist eine Steuer- und Auswertungseinheit 16 verbunden, die Bilddaten ausliest und verarbeitet. Die Steuer- und Auswertungseinheit 16 kann in verschiedenster Hardware implementiert sein, beispielsweise einem oder mehreren digitalen Bausteinen wie Mikroprozessoren, ASICs (Application Specific Integrated Circuit), FPGAs (Field Programmable Gate Array), GPUs (Graphics Processing Unit) oder Mischformen davon. Sie kann intern in der Kameravorrichtung 10, aber auch zumindest teilweise extern insbesondere auf einem Edge-Device oder in einer Cloud implementiert sein und vorzugsweise eine zumindest teilweise parallele Architektur aufweisen.

Mit dem Bildsensor 12 und der Steuer- und Auswertungseinheit 16 werden ein erster Kamerakanal 18 und ein zweiter Kamerakanal 20 gebildet. Somit nimmt der erste Kamerakanal 18 erste Bilddaten und der zweite Kamerakanal 20 zweite Bilddaten auf und wertet sie jeweils aus. Ziel dieser Auswertung ist die Lokalisierung mindestens eines optischen Markers 22, der insbesondere ein Fiducial Marker ist. Mit Hilfe des optischen Markers 22 wird die relative Pose der Kameravorrichtung 10 zu dem optischen Marker 22 und somit die Pose des Objekts mit dem Marker 22 im Bezugssystem der Kameravorrichtung bestimmt. Dies erfolgt separat und diversitär-redundant in beiden Kamerakanälen 18, 20. Anschließend wird durch Vergleich der ersten Pose aus dem ersten Kamerakanal 18 und der zweiten Pose aus dem zweiten Kamerakanal 20 festgestellt, ob die Posenbestimmung verlässlich oder sicher ist.

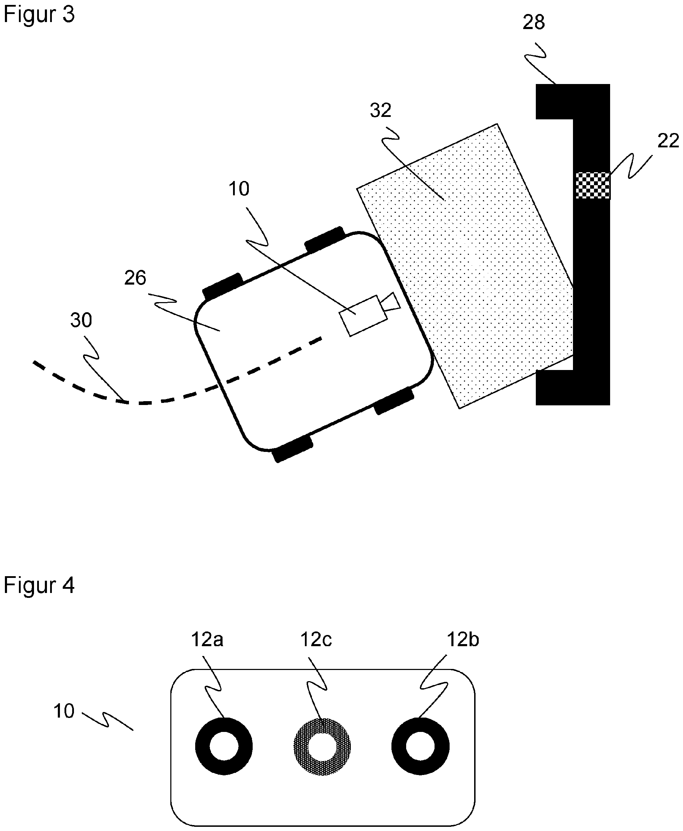

Die Darstellung der beiden Kamerakanäle 18, 20 ist ganz abstrakt zu verstehen. Kamerakanäle 18, 20 können einen Bildsensor 12 gemeinsam nutzen, jeweils mindestens einen eigenen Bildsensor 12 aufweisen oder mehrere Bildsensoren 12 in teilweise überlappenden Gruppen nutzen. Ähnliches gilt für Bausteine oder Funktionen der Steuer- und Auswertungseinheit 16. Die Kamerakanäle 18, 20 können wie dargestellt eine gemeinsame Kamera, ebenso aber auch separate Kameras mit eigenem Objektiv und/oder Gehäuse bilden. Unter Bezugnahme auf die Figuren 4 sowie 9 bis 11 werden verschiedene Ausführungsformen der Kamerakanäle 18, 20 näher erläutert.

Vorzugsweise ist die Kameravorrichtung 10 in sicherheitstechnischer Anwendung zur Überwachung einer Maschine und Unfallvermeidung insbesondere mit Personen eingesetzt und dafür sicher im einleitend erläuterten Sinne einschlägiger Sicherheitsnormen ausgebildet. Sie erreicht insbesondere dank der beiden Kamerakanäle 18, 20 eine bestimmte Sicherheitsstufe wie SIL oder PD. Die erhöhte Verlässlichkeit ist jedoch auch außerhalb der Sicherheitstechnik von Vorteil. Die Aufgabe in sicherheitstechnischer Anwendung ist, rechtzeitig zu erkennen, wenn ein Objekt beziehungsweise eine Person oder ein Körperteil einem gefährlichen Maschinenteil zu nahe kommt. Das kann beispielsweise durch entsprechend konfigurierte Schutzfelder erkannt werden, die anschaulich als eine Art virtuelle Wand verstanden werden können, oder es wird ein geschwindigkeitsabhängiger Mindestabstand gefordert (Speed-and-Separation-Monitoring). Wird eine Gefahrensituation erkannt, so wird ein sicherheitsgerichtetes Absicherungssignal insbesondere über einen sicheren Ausgang (OSSD, Output Signal Switching Device) ausgegeben. Die überwachte Maschine wird dementsprechend verlangsamt, weicht aus oder löst einen Nothalt aus.

Es können mehrere Kameravorrichtungen 10 vorgesehen sein, die sich auf ein gemeinsames Koordinatensystem geeinigt haben, um Erfassungen aus unterschiedlichen Perspektiven zu ermöglichen, einen größeren Sichtbereich zu erzielen, in dem der optische Marker 22 nicht verloren geht, sowie Abschattungsprobleme zu vermeiden.

Figur 2 zeigt eine beispielhafte Anwendungssituation der Kameravorrichtung 10. Dabei ist der optische Marker22 an einem Roboter24 angebracht, dessen Pose bestimmt wird.

Abweichend von der Darstellung ist ein optischer Marker 22 an anderen Gliedern des Roboters 24, insbesondere an dessen Endeffektor, beziehungsweise an mehreren Gliedern möglich. Durch Identifikation, Posenbestimmung und gegebenenfalls auch Verfolgung über die Zeit werden die Roboterbewegungen überwacht. Die verlässliche, vorzugsweise sichere Posenbestimmung durch die beiden Kamerakanäle 18, 20 ermöglicht eine sichere Mensch-Roboter-Kollaboration (HRC, Human Robot Collaboration). Ergänzend beziehungsweise zum Erreichen noch höherer Sicherheitsstufen kann die Kameravorrichtung 10 die intern in der Robotersteuerung bestimmte Kinematik oder Vorwärtskinematik validieren, die üblicherweise auf einfachen Sensormessungen etwa von Drehgebern in den Robotergelenken beruht und die allein keine ausreichenden Sicherheitsanforderungen erfüllt.

Figur 3 zeigt eine weitere beispielhafte, nun mobile Anwendungssituation der Kameravorrichtung 10 mit Bestimmung der Pose eines Fahrzeugs 26, an dem die Kameravorrichtung 10 mitbewegt montiert ist. Es handelt sich insbesondere um ein autonomes Fahrzeug 26 wie einen autonomen mobilen Roboter. Der optische Marker 22 ist hier an der umgebenden Infrastruktur angebracht, beispielhaft an einer Ladestation 28. Die verlässlich durch die beiden Kamerakanäle 18, 20 bestimmte Pose des Fahrzeugs 26 ermöglicht ein präzises Navigieren zu der Ladestation 28 und Einparken an der Ladestation 28. Der bisherige Fahrweg ist als gestrichelte Linie der Trajektorie 30 angedeutet. Über das reine Navigieren hinaus kann die Kameravorrichtung 10 das Fahrzeug 26 absichern, hier dargestellt durch ein Schutzfeld 32. Während des Einparkens wird das Schutzfeld 32 vorzugsweise angepasst, um zu vermeiden, dass Umgebungsobjekte wie Teile der Ladestation 28 eine ungewollte Schutzfeldverletzung auslösen. Die mit dem optischen Marker 22 bestimmte Pose dient dazu, das jeweils benötigte Schutzfeld 32 während der Annäherungsbewegung immer wieder iterativ anzupassen. In ähnlicher Weise können optische Marker 22 die Navigation und vorzugsweise Absicherung an beliebigen Stellen unterstützen, unabhängig von einer Ladestation 28.

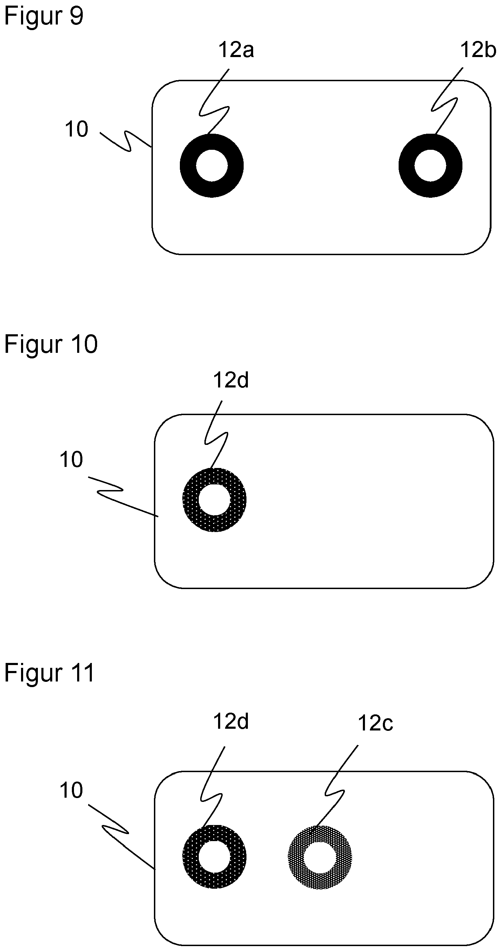

Figur 4 ist eine schematische Darstellung einer Ausführungsform der Kameravorrichtung 10 mit zwei Stereo-Bildsensoren 12a-b und einem monochromen oder RGB-Bildsensor 12c. Die Stereo-Bildsensoren 12a-b können einen Global Shutter aufweisen und monochrom sein, der monochrome oder RGB-Bildsensor kann einen Global Shutter oder Rolling Shutter aufweisen. Die Bildsensoren 12a-b, 12c können sich untereinander außer in ihrem Shutter oder Belichtungsmechanismus in weiteren Merkmalen unterscheiden, um die Diversität zu erhöhen. Solche Unterschiede können in der Anzahl der Pixel, der Pixelgröße, Pixelfehlern oder unterschiedlichen elektronischen Pixelarchitekturen liegen. Weiterhin weisen die Bildsensoren 12a-c einen sogenannten Fixed Pattern Noise (FPN) auf, wobei hier noch DSNU (dark signal non-uniformity) und PRNU (Photoresponse non-uniformity) differenziert werden können. Eine erhöhte Diversität durch Unterschiede in den Bildsensoren 12 der beiden Kamerakanäle 18, 20 gilt sinngemäß ebenso für die allgemeine Darstellung unter Bezugnahme auf die Figur 1 sowie die später unter Bezugnahme auf die Figuren 9 bis 11 vorgestellten weiteren Ausführungsformen. Zur Diversität trägt auch die leicht unterschiedliche Perspektive der Bildsensoren 12a-c in den Kamerakanälen 18, 20 bei.

In der Ausführungsform gemäß Figur 4 bilden ohne Beschränkung der Allgemeinheit die Stereo-Bildsensoren 12a-b den ersten Kamerakanal 18, während der monochrome oder RGB-Bildsensor 12c den zweiten Kamerakanal 20 bildet. Im ersten Kamerakanal 18 werden aus den beiden Ausgangsbildern der Stereo-Bildsensoren 12a-b mit Hilfe einer stereoskopischen Disparitätsschätzung dreidimensionale Bilddaten beziehungsweise eine Tiefenkarte bestimmt. Eines der beiden Ausgangsbilder der Stereo-Bildsensoren 12a-b kann zudem verwendet werden, um diejenigen Pixel zu identifizieren, die dem optischen Marker 22 zuzurechnen sind. Deren 3D-Position ist dann aus der Tiefenkarte bekannt, so dass die Pose bestimmbar wird. Für die Lokalisierung des optischen Markers 22 in den Ausgangsbildern können an sich bekannte zweidimensionale Auswertungen eingesetzt werden, die den optischen Marker 22 anhand seines Kontrastes, seines Musters oder speziell seiner Referenzmerkmale erkennen. In dem zweiten Kamerakanal 20 werden insgesamt nur zweidimensionale Auswertungen benötigt, hier wird vorzugsweise auf Vision-Systeme wie AprilTag zurückgegriffen. AprilTag und vergleichbare Vision-Systeme können auch im ersten Kamerakanal 18 eingesetzt werden, um die zu dem optischen Marker 22 gehörigen Pixel in den Ausgangsbildern zu finden.

Insgesamt entsteht so eine diversitäre Bilderfassung, Lokalisierung des optischen Markers 22 und Posenbestimmung des optischen Markers 22 bezüglich der Kameravorrichtung 10. Wegen der Heterogenität ist mit der Ausführungsform gemäß Figur 4 auf Basis zweier Bildsensoren 12a-b in einem ersten stereoskopischen Kamerakanal 18 und eines zusätzlichen Bildsensors 12c in einem zweiten monochromen oder RGB-Kamerakanal 20 eine hohe Sicherheitsstufe erreichbar (SIL nach IEC/EN 61508 beziehungsweise PD nach IEC/EN 13849).

Die stereoskopische Erfassung kann passiv erfolgen. Im alternativen Falle der aktiven Stereoskopie wird ein strukturiertes Muster projiziert, um robuste Korrespondenzen auch in homogenen Szenerien zu erzeugen und so dichtere Tiefenkarten erfassen zu können. In diesem Fall werden vorzugsweise Maßnahmen ergriffen, damit das projizierte strukturierte Muster die monochrome oder RGB-Aufnahme des zusätzlichen Bildsensors 12c nicht stört. Dazu zählen ein Bandpassfilter, der die Wellenlänge der Beleuchtung ausfiltert, oder ein Zeitmultiplexing der Aufnahmen mit intermittierend ausgeschalteter Beleuchtung.

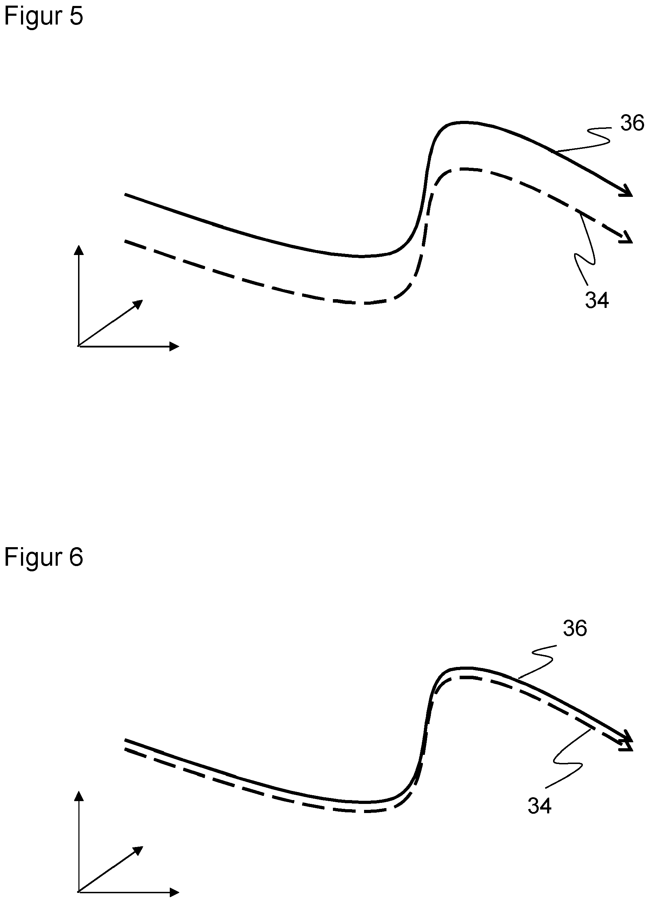

Figur 5 zeigt eine Illustration des Versatzes zwischen den Posen in den beiden Kamerakanälen 18, 20 über die Zeit. Stellvertretend sind die Positionen beziehungsweise die davon erzeugten Trajektorien gezeigt, und zwar mit gestrichelter Linie 34 diejenige des ersten stereoskopischen Kamerakanals 18 und mit durchgezogener Linie 36 diejenige des zweiten monochromen oder RGB-Kamerakanals 20. Das gezeigte Beispiel ist damit auf die Ausführungsform gemäß Figur 4 bezogen, aber ähnliche Effekte zeigen sich bei anderen Auslegungen der Kamerakanäle 18, 20.

Eine anfängliche Abweichung zwischen den Kamerakanälen 18, 20 setzt sich über die Zeit fort. Daher ist es vorteilhaft, eine Kompensation der systematischen Abweichungen insbesondere durch anfängliche Kalibration vorzunehmen. Das umfasst vorzugsweise eine Kalibration der Bildsensoren 12a-c, der Objektive 14 und der Montageposition, um die intrinsischen und extrinsischen Kameraparameter zu kennen. Damit lassen sich dann anfängliche systematische Abweichungen korrigieren. Mit umfasst ist dabei der Versatz in X-Richtung, der von den Parallaxen aufgrund des lateralen Versatzes der Bildsensoren 12a-c herrührt. Figur 6 illustriert den durch Kalibration kompensierten Versatz, bringt folglich die beiden Trajektorien 34, 36 der Figur 5 im Rahmen von Restfehlern in Übereinstimmung.

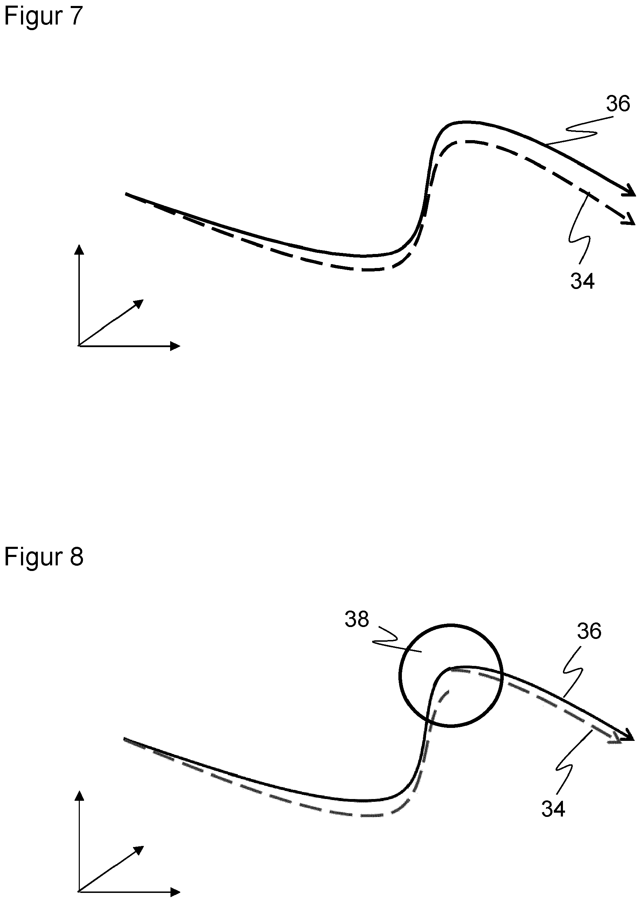

Figur 7 zeigt eine Illustration des Auseinanderdriftens der Trajektorien 34, 36 trotz anfänglicher Kalibration. Solange das Auseinanderdriften allmählich und gleichmäßig erfolgt, kann es als unkritisch betrachtet werden, so dass die zulässige Toleranz beim Kreuzvergleich der Posen aus den beiden Kamerakanälen 18, 20 mit dem Auseinanderdriften erhöht werden kann. Sprunghaftes Auseinanderdriften hingegen deutet auf einen Fehler hin. Alternativ kann die Kameravorrichtung 10 streng fordern, dass die Posen innerhalb vorgegebener Toleranzen übereinstimmen, ungeachtet der Quelle des Unterschieds und eines Anteils, der durch Auseinanderdriften erklärt wäre.

Figur 8 illustriert eine mögliche Wiederholung der Kalibration zu einem mit Kreis 38 markierten Zeitpunkt. Dies kann zyklisch, zu festgelegten Zeitpunkten oder sogar zufällig geschehen, oder immer dann, wenn das Auseinanderdriften einen Schwellwert überschreitet. Alternativ zu einer erneuten Kalibration kann die Berechnung zurückgesetzt werden, d.h. beide Posen werden künstlich wieder aufeinandergelegt, entweder auf den Wert aus einem der Kamerakanäle 18, 20 oder einer Verrechnung wie dem Mittelwert.

Figur 9 zeigt eine schematische Darstellung einer weiteren Ausführungsform der Kameravorrichtung 10, die nun im Gegensatz zu Figur 4 zwei Stereo-Bildsensoren 12a-b ohne zusätzlichen monochromen oder RGB-Bildsensor aufweist. Wiederum kann der erste stereoskopische Kamerakanal 18 passiv oder aktiv ausgebildet sein. Der zweite Kamerakanal 20 wird hier von einem der beiden Stereo-Bildsensoren 12a-b gebildet, so dass der betroffene Stereo-Bildsensor 12a-b eine Doppelfunktion bekommt. Der einfachere Gesamtaufbau ohne zusätzlichen monochromen oder RGB-Bildsensor führt zu weniger Heterogenität oder Diversität. Damit werden eher nur mittlere Sicherheitsstufen wie SIL oder PD erreicht.

Figur 10 zeigt eine schematische Darstellung einer weiteren Ausführungsform der Kameravorrichtung 10 mit einem TOF-Bildsensor 12d. In dieser Ausführungsform gibt es somit insgesamt nur einen einzigen Bildsensor. Im Markt verfügbare TOF-Bildsensoren können zugleich mittels Lichtlaufzeitverfahren hochwertige Tiefenkarten und aus der jeweiligen Intensität Grauwertbilder erzeugen. Die Tiefenkarten und Grauwertbilder sind automatisch richtig zueinander ausgerichtet, da dieselben Pixel zugrunde liegen. Aus den Grauwertbildern kann wiederum in herkömmlicher Weise, beispielsweise mit AprilTag oder einem anderen einleitend genannten Vision-System, die Pose des optischen Markers 22 rekonstruiert werden. Die Tiefenkarten ermöglichen eine direkte Bestimmung der 3D-Positionen mit einem ganz anderen Verfahren, nämlich dem Lichtlaufzeitverfahren. Es werden dennoch nur vergleichsweise geringe Sicherheitsstufen erreicht, weil sämtliche Bilddaten von demselben Bildsensor 12d erzeugt sind.

Figur 11 zeigt eine schematische Darstellung einer weitere Ausführungsform der Kameravorrichtung 10, die nun im Gegensatz zu der Ausführungsform gemäß Figur 10 einen zusätzlichen monochromen oder RGB-Bildsensor 12c neben dem TOF-Bildsensor 12d aufweist. Dadurch wird die Diversität wieder auf die gesamten Kamerakanäle 18, 20 erstreckt. Es lassen sich deshalb nun mittlere bis hohe Sicherheitsstufen erzielen.

## Patentansprüche

1. Kameravorrichtung (10) zur Lokalisierung eines optischen Markers (22), wobei die Kameravorrichtung (10) mindestens einen Bildsensor (12) und eine Steuer- und Auswertungseinheit (16) aufweist, wobei aus dem mindestens einen Bildsensor (12) und der Steuer- und Auswertungseinheit (16) ein erster Kamerakanal (18) zur Aufnahme erster Bilddaten mit dem optischen Marker (22) und ein zweiter Kamerakanal (20) zur Aufnahme zweiter Bilddaten mit dem optischen Marker (22) gebildet sind und die Steuer- und Auswertungseinheit (16) dafür ausgebildet ist, den optischen Marker (22) in den ersten Bilddaten aufzufinden und eine erste Pose des optischen Markers (22) relativ zu der Kameravorrichtung (10) zu bestimmen und den optischen Marker (22) in den zweiten Bilddaten aufzufinden und eine zweite Pose des optischen Markers (22) relativ zu der Kameravorrichtung (10) zu bestimmen,
**dadurch gekennzeichnet,**
**dass** der optische Marker (22) mindestens drei Referenzmerkmale bekannter Positionen innerhalb des optischen Markers (22) aufweist, insbesondere ein Fiducial Marker ist, und dass die Steuer- und Auswertungseinheit (16) dafür ausgebildet ist, die erste Pose und die zweite Pose miteinander zu vergleichen und ein Absicherungssignal an eine überwachte Maschine (24, 26) auszugeben, wenn die erste Pose und die zweite Pose über eine Toleranz hinaus voneinander abweichen.

2. Kameravorrichtung (10) nach einem der vorhergehenden Ansprüche,
wobei die Steuer- und Auswertungseinheit (16) dafür ausgebildet ist, die erste Pose und/oder zweite Pose über die Zeit zu verfolgen und insbesondere eine Vorhersage einer Pose in dem Vergleich der ersten Pose mit der zweiten Pose zu berücksichtigen.

3. Kameravorrichtung (10) nach einem der vorhergehenden Ansprüche,
wobei mindestens ein Kamerakanal (18, 20) farbige oder monochrome zweidimensionale Bilddaten aufnimmt und die zweidimensionalen Bilddaten auswertet.

4. Kameravorrichtung (10) nach einem der vorhergehenden Ansprüche,
wobei mindestens ein Kamerakanal (18, 20) dreidimensionale Bilddaten nach dem Stereoskopieprinzip aufnimmt und die dreidimensionalen Bilddaten auswertet.

5. Kameravorrichtung (10) nach einem der vorhergehenden Ansprüche,
wobei mindestens ein Kamerakanal (18, 20) dreidimensionale Bilddaten nach dem Lichtlaufzeitverfahren aufnimmt und die dreidimensionalen Bilddaten auswertet.

6. Kameravorrichtung (10) nach einem der vorhergehenden Ansprüche,
wobei die Kameravorrichtung (10) als Monochrom-Stereokamera oder als RGB-Stereokamera mit einem dritten Bildsensor ausgebildet ist, so dass sie zwei Stereo-Bildsensoren (12a-b) für die stereoskopische Erfassung zweier versetzter Bilder und einen zusätzlichen Monochrom-Bildsensor (12c) oder RGB-Bildsensor (12c) aufweist, wobei der Monochrom-Bildsensor (12c) oder der RGB-Bildsensor (12c) in dem ersten Kamerakanal (18) eingesetzt ist und die beiden Stereo-Bildsensoren (12a-b) in dem zweiten Kamerakanal (20) eingesetzt sind.

7. Kameravorrichtung (10) nach einem der Ansprüche 1 bis 5,
wobei die Kameravorrichtung (10) als Stereokamera mit zwei Stereo-Bildsensoren (12a-b) für die stereoskopische Erfassung zweier versetzter Bilder ausgebildet ist, wobei einer der Stereo-Bildsensoren (12a-b) in dem ersten Kamerakanal (18) eingesetzt ist und die beiden Stereo-Bildsensoren (12a-b) in dem zweiten Kamerakanal (20) eingesetzt sind.

8. Kameravorrichtung (10) nach einem der Ansprüche 1 bis 5,
wobei die Kameravorrichtung (10) als Lichtlaufzeitkamera mit einem TOF-Bildsensor (12d) ausgebildet ist, wobei aus Intensitäten des TOF-Bildsensors (12d) die ersten Bilddaten und aus Lichtlaufzeiten des TOF-Bildsensor (12d) die zweiten Bilddaten erzeugt werden.

9. Kameravorrichtung (10) nach einem der Ansprüche 1 bis 5,
wobei die Kameravorrichtung (10) als Lichtlaufzeitkamera mit einem TOF-Bildsensor (12d) und einem zusätzlichen Monochrom-Bildsensor (12c) oder RGB-Bildsensor (12c) ausgebildet ist, wobei der Monochrom-Bildsensor (12c) oder RGB-Bildsensor (12c) in dem ersten Kamerakanal (18) und der TOF-Bildsensor (12d) in dem zweiten Kamerakanal (20) eingesetzt ist.

10. Kameravorrichtung (10) nach einem der vorhergehenden Ansprüche,
wobei die Kameravorrichtung (10) mindestens einen Bildsensor (12, 12a-d) je Kamerakanal (18, 20) aufweist und wobei die Bildsensoren (12, 12a-d) unterschiedlicher Kamerakanäle (18, 20) zueinander diversitär ausgebildet sind, sich insbesondere in ihrer Pixelanzahl, ihrer Pixelgröße, ihrem Pixelmuster, ihrer Pixelauslegung oder ihrem Fixed-Pattern-Noise voneinander unterscheiden.

11. Kameravorrichtung (10) nach einem der vorhergehenden Ansprüche,
wobei die Steuer- und Auswertungseinheit (16) für eine gegenseitige Kalibration der Kamerakanäle (18, 20) ausgebildet ist, in der die erste Pose und die zweite Pose zumindest zeitweise miteinander in Übereinstimmung gebracht wird.

12. Verfahren zur Lokalisierung eines optischen Markers (22) mit einer Kameravorrichtung (10), insbesondere einer Kameravorrichtung (10) nach einem der vorhergehenden Ansprüche, wobei in einem ersten Kamerakanal (18) erste Bilddaten aufgenommen und von einer Steuer- und Auswertungseinheit ausgewertet werden, um den optischen Marker (22) in den ersten Bilddaten aufzufinden und eine erste Pose des optischen Markers (22) relativ zu der Kameravorrichtung (10) zu bestimmen, und in einem zweiten Kamerakanal (20) zweite Bilddaten aufgenommen und von der Steuer- und Auswertungseinheit ausgewertet werden, um den optischen Marker (22) in den zweiten Bilddaten aufzufinden und eine zweite Pose des optischen Markers (22) relativ zu der Kameravorrichtung (10) zu bestimmen,
**dadurch gekennzeichnet,**
**dass** der optische Marker (22) mindestens drei Referenzmerkmale bekannter Positionen innerhalb des optischen Markers (22) aufweist, insbesondere ein Fiducial Marker ist, und dass die erste Pose und die zweite Pose von der Steuer- und Auswertungseinheit miteinander verglichen werden und ein Absicherungssignal an eine überwachte Maschine (24, 26) ausgegeben wird, wenn die erste Pose und die zweite Pose über eine Toleranz hinaus voneinander abweichen.

## Claims

1. A camera device (10) for localizing an optical marker (22), the camera device (10) comprising at least one image sensor (12) and a control and evaluation unit (16), a first camera channel (18) for recording first image data with the optical marker (22) and a second camera channel (20) for recording second image data with the optical marker (22) being formed from the at least one image sensor (12) and the control and evaluation unit (16), and the control and evaluation unit (16) being configured to locate the optical marker (22) in the first image data and to determine a first pose of the optical marker (22) relative to the camera device (10) and to locate the optical marker (22) in the second image data and to determine a second pose of the optical marker (22) relative to the camera device (10),
**characterized in that** the optical marker (22) comprises at least three reference features of known positions within the optical marker (22), in particular is a fiducial marker, and **in that** the control and evaluation unit (16) is configured to compare the first pose and the second pose with one another and to output a safeguarding signal to a monitored machine (24, 26) if the first pose and the second pose deviate from one another beyond a tolerance.

2. The camera device (10) according to any of the preceding claims,
wherein the control and evaluation unit (16) is configured to track the first pose and/or second pose over time and in particular to take into account a prediction of a pose in the comparison of the first pose with the second pose.

3. The camera device (10) according to any of the preceding claims,
wherein at least one camera channel (18, 20) records colored or monochrome two-dimensional image data and evaluates the two-dimensional image data.

4. The camera device (10) according to any of the preceding claims,
wherein at least one camera channel (18, 20) records three-dimensional image data according to the stereoscopic principle and evaluates the three-dimensional image data.

5. The camera device (10) according to any of the preceding claims,
wherein at least one camera channel (18, 20) records three-dimensional image data according to the light time-of-flight method and evaluates the three-dimensional image data.

6. The camera device (10) according to any of the preceding claims,
wherein the camera device (10) is configured as a monochrome stereo camera or as an RGB stereo camera having a third image sensor, so that it comprises two stereo image sensors (12a-b) for the stereoscopic acquisition of two offset images and an additional monochrome image sensor (12c) or RGB image sensor (12c), wherein the monochrome image sensor (12c) or the RGB image sensor (12c) is used in the first camera channel (18) and the two stereo image sensors (12a-b) are used in the second camera channel (20).

7. The camera device (10) according to any of claims 1 to 5,
wherein the camera device (10) is configured as a stereo camera having two stereo image sensors (12a-b) for the stereoscopic acquisition of two offset images, wherein one of the stereo image sensors (12a-b) is used in the first camera channel (18) and the two stereo image sensors (12a-b) are used in the second camera channel (20).

8. The camera device (10) according to any of claims 1 to 5,
wherein the camera device (10) is configured as a light time-of-flight camera having a TOF image sensor (12d), wherein the first image data is generated from intensities of the TOF image sensor (12d) and the second image data is generated from light times-of-flight of the TOF image sensor (12d).

9. The camera device (10) according to any of claims 1 to 5,
wherein the camera device (10) is configured as a light time-of-flight camera having a TOF image sensor (12d) and an additional monochrome image sensor (12c) or RGB image sensor (12c), wherein the monochrome image sensor (12c) or RGB image sensor (12c) is used in the first camera channel (18) and the TOF image sensor (12d) is used in the second camera channel (20).

10. The camera device (10) according to any of the preceding claims,
wherein the camera device (10) comprises at least one image sensor (12, 12a-d) per camera channel (18, 20) and wherein the image sensors (12, 12a-d) of different camera channels (18, 20) are configured to be diverse with respect to one another, in particular differing from one another in their number of pixels, their pixel size, their pixel pattern, their pixel layout or their fixed-pattern noise.

11. The camera device (10) according to any of the preceding claims,
wherein the control and evaluation unit (16) is configured for a mutual calibration of the camera channels (18, 20), in which the first pose and the second pose are at least temporarily aligned with one another.

12. A method for localizing an optical marker (22) with a camera device (10), in particular a camera device (10) according to any of the preceding claims, wherein first image data is recorded in a first camera channel (18) and evaluated by a control and evaluation unit in order to locate the optical marker (22) in the first image data and to determine a first pose of the optical marker (22) relative to the camera device (10), and second image data is recorded in a second camera channel (20) and evaluated by the control and evaluation unit in order to locate the optical marker (22) in the second image data and to determine a second pose of the optical marker (22) relative to the camera device (10), **characterized in that** the optical marker (22) comprises at least three reference features of known positions within the optical marker (22), in particular is a fiducial marker, and **in that** the first pose and the second pose are compared with one another by the control and evaluation unit and a safeguarding signal is output to a monitored machine (24, 26) if the first pose and the second pose deviate from one another beyond a tolerance.

## Revendications

1. Dispositif de caméra (10) pour localiser un marqueur optique (22), le dispositif de caméra (10) comprenant au moins un capteur d'image (12) et une unité de commande et d'évaluation (16), ledit au moins un capteur d'image (12) et l'unité de commande de d'évaluation (16) formant un premier canal de caméra (18), destiné à enregistrer des premières données d'image avec le marqueur optique (22), et un deuxième canal de caméra (20), destiné à enregistrer des deuxièmes données d'image avec le marqueur optique (22), et l'unité de commande et d'évaluation (16) étant conçue pour trouver le marqueur optique (22) dans les premières données d'image et pour déterminer une première pose du marqueur optique (22) par rapport au dispositif de caméra (10) et pour trouver le marqueur optique (22) dans les deuxièmes données d'image et pour déterminer une deuxième pose du marqueur optique (22) par rapport au dispositif de caméra (10),
**caractérisé en ce que**
le marqueur optique (22) présente au moins trois caractéristiques de référence de positions connues à l'intérieur du marqueur optique (22) et est en particulier un marqueur de repère, et
**en ce que** l'unité de commande et d'évaluation (16) est conçue comparer entre elles la première pose et la deuxième pose et pour émettre un signal de sécurisation à une machine surveillée (24, 26) si la première pose et la deuxième pose diffèrent l'une de l'autre au-delà d'une tolérance.

2. Dispositif de caméra (10) selon la revendication précédente,
dans lequel l'unité de commande et d'évaluation (16) est conçue pour suivre la première pose et/ou la deuxième pose dans le temps et en particulier pour prendre en compte une prédiction d'une pose dans la comparaison de la première pose avec la deuxième pose.

3. Dispositif de caméra (10) selon l'une des revendications précédentes,
dans lequel au moins un canal de caméra (18, 20) enregistre des données d'image bidimensionnelles en couleurs ou monochromes et évalue les données d'image bidimensionnelles.

4. Dispositif de caméra (10) selon l'une des revendications précédentes,
dans lequel au moins un canal de caméra (18, 20) enregistre des données d'image tridimensionnelles selon le principe de la stéréoscopie et évalue les données d'image tridimensionnelles.

5. Dispositif de caméra (10) selon l'une des revendications précédentes, dans lequel au moins un canal de caméra (18, 20) enregistre des données d'image tridimensionnelles selon le principe du temps de vol de lumière et évalue les données d'image tridimensionnelles.

6. Dispositif de caméra (10) selon l'une des revendications précédentes, dans lequel le dispositif de caméra (10) est conçu comme une caméra stéréo monochrome ou comme une caméra stéréo RVB avec un troisième capteur d'image, de manière à comprendre deux capteurs d'image stéréo (12a-b) pour la saisie stéréoscopique de deux images décalées et un capteur d'image monochrome (12c) ou un capteur d'image RVB (12c) supplémentaire, le capteur d'image monochrome (12c) ou le capteur d'image RVB (12c) étant inséré dans le premier canal de caméra (18) et les deux capteurs d'image stéréo (12a-b) étant insérés dans le deuxième canal de caméra (20).

7. Dispositif de caméra (10) selon l'une des revendications 1 à 5,
dans lequel le dispositif de caméra (10) est conçu comme une caméra stéréo avec deux capteurs d'image stéréo (12a-b) pour la saisie stéréoscopique de deux images décalées, l'un des capteurs d'image stéréo (12a-b) étant inséré dans le premier canal de caméra (18) et les deux capteurs d'image stéréo (12a-b) étant insérés dans le deuxième canal de caméra (20).

8. Dispositif de caméra (10) selon l'une des revendications 1 à 5,
dans lequel le dispositif de caméra (10) est conçu comme une caméra à temps de vol de lumière avec un capteur d'image TOF (12d), les premières données d'image étant générées à partir des intensités du capteur d'image TOF (12d) et les deuxièmes données d'image étant générées à partir des temps de vol de lumière du capteur d'image TOF (12d).

9. Dispositif de caméra (10) selon l'une des revendications 1 à 5,
dans lequel le dispositif de caméra (10) est conçu comme une caméra à temps de vol de lumière avec un capteur d'image TOF (12d) et un capteur d'image monochrome (12c) ou un capteur d'image RVB (12c) supplémentaire, le capteur d'image monochrome (12c) ou le capteur d'image RVB (12c) étant inséré dans le premier canal de caméra (18) et le capteur d'image TOF (12d) étant inséré dans le deuxième canal de caméra (20).

10. Dispositif de caméra (10) selon l'une des revendications précédentes, dans lequel le dispositif de caméra (10) comprend au moins un capteur d'image (12, 12a-d) par canal de caméra (18, 20), et les capteurs d'image (12, 12a-d) de différents canaux de caméra (18, 20) sont conçus de manière diversitaire les uns par rapport aux autres, se distinguent les uns des autres en particulier par leur nombre de pixels, par leur taille de pixels, par leur motif de pixels, par leur conception de pixels ou par leur bruit à motif fixe.

11. Dispositif de caméra (10) selon l'une des revendications précédentes, dans lequel l'unité de commande et d'évaluation (16) est conçue pour un étalonnage mutuel des canaux de caméra (18, 20), dans lequel la première pose et la deuxième pose sont amenées à coïncider entre elles au moins temporairement.

12. Procédé de localisation d'un marqueur optique (22) avec un dispositif de caméra (10), en particulier un dispositif de caméra (10) selon l'une des revendications précédentes,
dans lequel des premières données d'image sont enregistrées dans un premier canal de caméra (18) et sont évaluées par une unité de commande et d'évaluation, afin de trouver le marqueur optique (22) dans les premières données d'image et de déterminer une première pose du marqueur optique (22) par rapport au dispositif de caméra (10), et des deuxièmes données d'image sont enregistrées dans un deuxième canal de caméra (20) et sont évaluées par l'unité de commande et d'évaluation, afin de trouver le marqueur optique (22) dans les deuxièmes données d'image et de déterminer une deuxième pose du marqueur optique (22) par rapport au dispositif de caméra (10),
**caractérisé en ce que**
le marqueur optique (22) présente au moins trois caractéristiques de référence de positions connues à l'intérieur du marqueur optique (22) et est en particulier un marqueur de repère, et
**en ce que** la première pose et la deuxième pose sont comparées entre elles par l'unité de commande et d'évaluation, et un signal de sécurisation est émis à une machine surveillée (24, 26) si la première pose et la deuxième pose diffèrent l'une de l'autre au-delà d'une tolérance.
